# EUROPEAN PATENT APPLICATION

(11) **EP 2 581 647 A2**
(43) Date of publication of application: **17.04.2013**
(21) Application number: 12187287.3
(22) Date of filing: 04.10.2012
(51) Int. Cl.: F21S 8/10, F21V 8/00, F21Y 101/02, F21W 101/12

(54) **Vehicular lamp**

(30) Priority: 14.10.2011 JP 2011226548
(71) Applicant: Koito Manufacturing Co., Ltd., Tokyo 108-8711 (JP)
(72) Inventor: Natsume, Kazunori, Shizuoka-shi, Shizuoka 424-8764 (JP)
(74) Representative: Grünecker, Kinkeldey, Stockmair & Schwanhäusser

(57) **Abstract**

A reflector (16) that reflects, toward the front of a lamp (10), light emitted by a light-emitting element (20A) includes a luminous region (Z1) that looks luminous and an unluminous region (Z2) that does not look luminous when the light-emitting element (20A) is lit and the lamp (10) is seen from the front of the lamp (10). A light guide (18) that allows light emitted by a light-emitting element (20B) to enter through a lateral end surface thereof and that emits the light from a front surface (18b) thereof to the front of the lamp (10), is disposed so that the luminous region (Z1) in the front (18b) overlaps the unluminous region (Z2) when the lamp (10) is seen from the front of the lamp (10).

## Description

### BACKGROUND OF THE INVENTION

### 1. Field of the Invention

The present invention relates to a vehicular lamp that includes a reflector and a light guide.

### 2. Description of Related Art

For example, as described in Japanese Patent Application Publication No. 2007-250401 (JP 2007-250401 A), a vehicular lamp is available in which light emitted by a first light source is reflected toward the front of the lamp by a reflector and light emitted by a second light source enters a light guide through a rear end surface thereof and is emitted from a front end surface thereof toward the front of the lamp.

In this vehicular lamp described in JP 2007-250401 A, an opening is formed on a reflective surface of the reflector, and the light guide is disposed so as to be passed through the opening.

Japanese Patent Application Publication No. 11-306810 (JP 11-306810 A) describes a vehicular lamp that includes a reflector and a second reflector. The reflector reflects, toward the front of the lamp, light emitted by a first light source. A second light source and the second reflector are disposed in part of a reflective surface of the reflector, and reflects, toward the front of the lamp, light emitted by the second light source.

The vehicular lamp described in JP 2007-250401 A has a configuration in which the light guide is disposed to be passed through the opening formed in the reflective surface of the reflector, and in which the second light source is composed of light-emitting elements. Accordingly, the depth of the lamp can be reduced.

However, in the vehicular lamp described in JP 2007-250401 A, the light that is emitted by the first light source and reflected by the reflector is partially blocked by the light guide, which may lead to decline in the light distribution performance.

The vehicular lamp described in JP 11-306810 A may also have lower light distribution performance because the second reflector is disposed in part of the reflective surface of the reflector.

### SUMMARY OF THE INVENTION

An object of the present invention is to provide a vehicular lamp that includes a reflector and a light guide, with which it is possible to improve light distribution performance without increasing depth of the lamp.

The present invention accomplishes the above object by devising configuration of the reflector and arrangement of the light guide.

A lamp according to an aspect of the present invention includes: a first light source; a reflector that reflects, toward a front of the lamp, light emitted by the first light source and directs the light; a second light source; and a light guide that attows light emitted by the second light source to enter through an end surface of the light guide and that emits the light from a front surface of the light guide toward the front of the lamp, **characterized in that** the reflector includes: a luminous region that looks luminous when the first light source is lit and the lamp is seen from the front of the lamp; and an unluminous region that does not look luminous when the first light source is lit and the lamp is seen from the front of the lamp, and the light guide is disposed so that a tight-emitting region in the front surface of the light guide overlaps the unluminous region when the lamp is seen from the front of the lamp.

Types of the "first light source" and the "second light source" are not particularly limited, and light-emitting diodes, etc. can be used as these light sources.

The shape or arrangement of the above "light guide" is not particularly limited as long as the light-emitting region in the front surface thereof overlaps the unluminous region of the reflector when the lamp is seen from the front of the lamp.

As described in the above configuration, in the vehicular lamp according to the aspect of the present invention, the tight emitted by the first light source is reflected toward the front of the lamp by the reflector, while the light emitted by the second light source is allowed to enter the light guide through one end surface thereof and is emitted from the front surface thereof toward the front of the lamp. Accordingly, it is possible to improve the light distribution performance of the vehicular lamp as compared to a lamp with a reflector optical system that only includes a first light source and a reflector.

In addition to the above, the reflector includes the luminous region that looks luminous when the first light source is lit and the lamp is seen from the front of the lamp, and the unluminous region that does not look luminous when the first light source is lit and the tamp is seen from the front of the lamp. The light guide is disposed so that the light-emitting region in the front surface thereof overlaps the unluminous region of the reflector when the lamp is seen from the front of the lamp. Therefore, without impairing the light distribution performance of the reflective optical system itself, it is possible to improve the light distribution performance of the lamp as a whole. Also, with use of the light guide, it is possible to obtain the above operations and effects without increasing the depth of the lamp.

As described above, according to the present invention, it is possible to improve light distribution performance of the vehicular lamp that includes the reflector and the light guide, without increasing the depth of the lamp.

Moreover, in the vehicular lamp according to the present invention, the unluminous region of the reflector, which would be an optically wasting portion, is used as a space to dispose the light guide. Accordingly, the lamp can have a compact configuration to save space.

In the above configuration, it is preferable that the luminous region of the reflector include a first reflective surface in the vicinity of the first light source and a second reflective surface that is arranged with the unluminous region interposed between the second reflective surface and the first light source. With this configuration, the light guide is disposed by efficiently using the space of the unluminous region of the reflector.

In this configuration, it is preferable that the light-emitting region in the front surface of the light guide be positioned ahead of at least part of the reflector. With this configuration, a three-dimensional appearance is given to the lamp.

In the above configuration, it is preferable that the reflector include: the first reflector that is positioned in front of the first light source and reflects, toward a rear of the lamp, the light emitted by the first light source; and the second reflector that reflects, toward the front of the lamp, the reflected light from the first reflector, and the light-emitting region in the front surface of the light guide be positioned in front of the first reflector, which is the unluminous region of the reflector. With this configuration, the light guide can be disposed by efficiently using the space ot this unluminous region.

In the above configuration, it is preferable that the first light source and the second light source have respective luminescent functions different from each other. With this configuration, the vehicular lamp can fully exhibit its functions. As modes of the "different luminescent functions", various modes can be adopted such as different luminescent colors, different luminescence intensities, and different luminescent periods or cycles.

In the above configuration, it is preferable that the light-emitting region in the front surface of the light guide entirely cover the unluminous region when the lamp is seen from the front of the lamp. With this configuration, it is possible to further improve the light distribution performance of the lamp as a whole.

In the above configuration, it is preferable that the light guide be disposed in a position such that the light guide does not overlap an optical path of the light that is emitted by the first sight source and reflected toward the front of the lamp by the first reflector. With this configuration, it is possible to further improve the light distribution performance.

In the above configuration, it is preferable that the reflector have a recessed section that is the unluminous region, an imaginary plane that includes the edges of the recessed section pass through the first light source, and the light guide be placed in the recessed section. With this configuration, the light guide can be disposed by efficiently using the space of the unluminous region of the reflector.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a front view that shows a vehicular lamp according to a first embodiment of the present invention;
FIG. 2 is a cross-sectional view along the line II-II in FIC. 1;
FIG. 3 is a cross-sectional view along the line III-III in FIG. 1;
FIG. 4 is a front view that shows a vehicular lamp according to a second embodiment of the present invention:
FIG. 5 is a cross-sectional view along the line V-V in FIG. 4:
FIG. 6 is a cross-sectional view along the line VI-VI in FIG. 4; and
FIG. 7 is a diagram that is similar to FIG. 4 and shows a modification of the second embodiment.

### DETAILED DESCRIPTION OF EMBODIMENTS

A description will hereinafter be made on embodiments of the present invention with reference to the accompanying drawings.

A first embodiment of the present invention is now described.

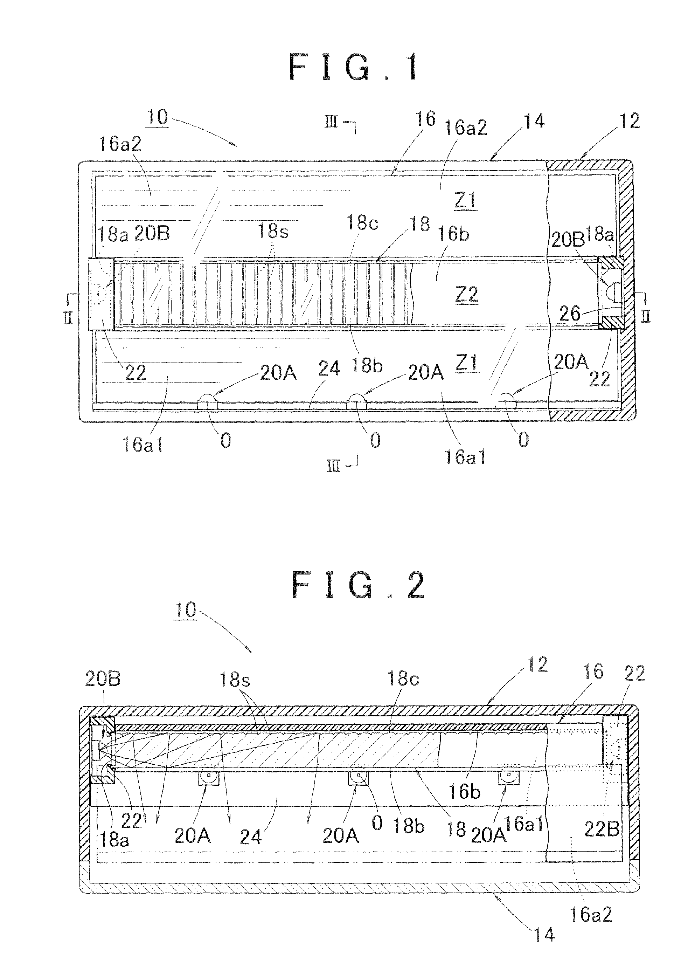

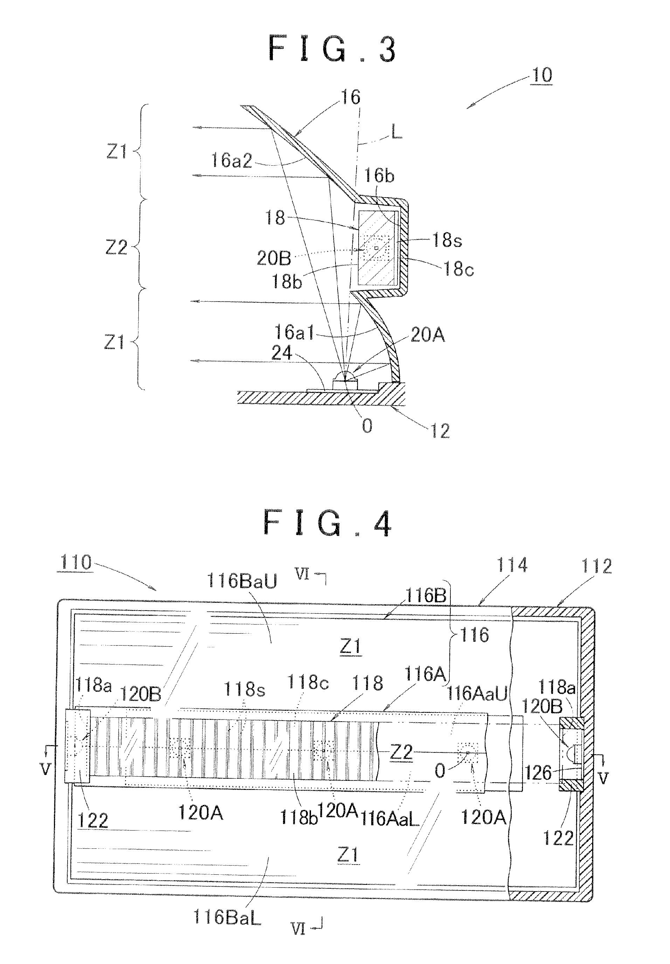

FIG. 1 is a front view of a vehicular lamp 10 according to this embodiment. FIG. 2 is a cross-sectional view along the line II-II in FIG. 1, and FIG. 3 is a caoss-sectional view along the line III-III in FIG. 1.

As shown in these figures, this vehicular lamp 10 functions as a front turn signal lamp and a clearance lamp when attached to a front end section of a vehicle, and includes a lamp body 12, a translucent cover 14 that is attached to a front end opening of the lamp body 12, five light-emitting elements 20A, 20B, a reflector 16, and a light guide 18. The light-emitting elements 20A, 20B, the reflector 16, and the light guide 18 are mounted in a lamp chamber that is formed by the lamp body 12 and the translucent cover 14.

Of the five light-emitting elements 20A, 20B, the three light-emitting elements 20A, which are amber light-emitting diodes, constitute a first light source for the front turn signal lamp. The remaining two light-emitting elements 20B, which are white light-emitting diodes, constitute a second light source for the clearance lamp.

The three light-emitting elements 20A are disposed on a lower end section in the lamp chamber with light-emitting surfaces thereof facing upward. Further, these three light-emitting elements 20A are disposed on the same horizontal plane at equally spaced intervals in a lateral direction (that is, a vehicle width direction) and installed on a single board 24. The board 24 is fixedly supported by the lamp body 12.

The two light-emitting elements 20B are respectively disposed on a right end section and a left end section in the lamp chamber in a manner such that the light-emitting surfaces thereof face each other in a horizontal direction. These two light-emitting elements 20B are installed on boards 26. Each of the boards 26 is fixedly supported by the lamp body 12.

The reflector 16 includes a luminous region Z1 and an unluminous region Z2. When the light-emitting elements 20A are lit and the vehicular lamp 10 is seen from the front of the vehicular lamp 10, the luminous region Z1 looks luminous and the unluminous region Z2 does not look luminous. More specifically, the reflector 16 includes a first reflective surface 16a1 in the vicinity of the three light-emitting elements 20A and a second reflective surface 16a2 that is disposed with the unluminous region Z2 interposed between the second reflective surface 16a2 and the three light-emitting elements 20A. The first reflective surface 16a1 has a parabolic cylindrical surface having a focal line on an axis that extends in the lateral direction and passes through the center of light emission O of each of the three light-emitting elements 20A. The second reflective surface 16a2 shares the focal line with the first reflective surface 16a1 and has a larger parabolic cylindrical surface than the first reflective surface 16a1.

A lower end edge of the first reflective surface 16a1 is generally positioned right behind the focal line, while an upper end edge thereof is generally positioned right above the focal line. Meanwhile, a lower end edge of the second reflective surface 16a2 is positioned above and slightly behind the upper end edge of the first reflective surface 16a1, while an upper end edge of the second reflective surface 16a2 is positioned obliquely upward and forward of the focal line. Accordingly, the light emitted by each of the light-emitting elements 20A in a rear direction of the lamp is reflected as generally horizontal parallel light beams directed to the front of the lamp by the first reflective surface 16a1. Furthermore, the light emitted by each of the light-emitting elements 20A in a front direction of the lamp is reflected as generally horizontal parallel light beams directed to the front of the lamp by the second reflective surface 16a2.

The unluminous region Z2 of the reflector 16 is formed as a recessed groove section 16b that is recessed toward the rear of the lamp from a position represented by a straight two-dotted broken line L (that is, a straight line that connects the upper end edge of the first reflective surface 16a1 and the center of light emission O of each of the three light-emitting elements 20A), which is shown in FIG. 3. The recessed groove section 16b is formed to extend in the lateral direction with the same cross-sectional shape. The recessed groove section 16b functions as a recessed section of the present invention.

The two light-emitting elements 20B, which are described above, are respectively positioned at the right end section and the left end section of the unluminous region Z2 provided in the form of the recessed groove section 16b.

The light guide 18 is accommodated in the recessed groove section 16b and extends in the lateral direction. The light guide 18 is fixedly supported at right and left end sections thereof by a pair of light guide support members 22. The pair of light guide support members 22 is fixedly supported by the lamp body 12. Each of the two light-emitting elements 20B is positioned in the vicinity of the paired right and left lateral end surfaces 18a of the light guide 18.

The light guide 18 is set so that the cross section thereof along a vertical plane, which extends in a front-back direction of the lamp, is in a vertically long rectangular shape. In other words, the light guide 18 has a rear surface 18c and a front surface 18b that are formed in the form of vertical surfaces extending in parallel to each other. On the rear surface 18c of the light guide 18, a plurality of reflective elements 18s are formed at generally equal intervals in the lateral direction. Each of the reflective elements 18s is formed in the form of a recessed groove that extends in the vertical direction and has a cuneiform cross section.

Of the light that is emitted by the light-emitting element 20B and enters the light guide 18 though the left lateral end surface 18a, the part of the light that reaches the rear surface 18c is totally internally reflected by a general section of the rear surface 18c, then totally internally reflected by the adjacent reflective element 18s on the right, and finally emitted through the front surface 18b generally toward the front of the lamp. On the other hand, the part of the above light that reaches the front surface 18b is totally internally reflected by the front surface 18b and reaches the rear surface 18c. Then, after totally internally reflected by the general section of the rear surface 18c, the light is totally internally reflected by the adjacent reflective element 18s on the right, and then emitted through the front surface 18b generally toward the front of the lamp.

In addition, the light that is emitted by the light-emitting element 20B and enters the light guide 18 through the right lateral end surface 18a follows the light path symmetrical to that of the light that is emitted by the light-emitting element 20B and enters the light guide 18 through the left lateral end surface 18a, and is emitted generally toward the front of the lamp.

Next, operations and effects of the embodiment will be described.

In the vehicular lamp 10 according to this embodiment, the light emitted by the light-emitting element 20A serving as the first light source is reflected toward the front of the lamp by the reflector 16, while the light emitted by the light-emitting element 20B serving as the second light source enters the light guide 18 through the lateral end surface 18a, which is one end surface of the light guide 18, and is emitted toward the front of the lamp through the front surface 18b. Therefore, the vehicular lamp 10 can obtain improved light distribution performance when compared to a lamp with a reflector optical system that only includes the light-emitting element 20A and the reflector 16.

Moreover, the reflector 16 includes the luminous region Z1 that looks luminous when the light-emitting elements 20A are lit and the vehicular lamp 10 is seen from the front of the vehicular lamp 10 and the unluminous region Z2 that does not look luminous when the light-emitting elements 20A are lit and the vehicular lamp 10 is seen from the front of the vehicular lamp 10. The light guide 18 is disposed so that the light-emitting region in the front surface 18b thereof overlaps the unluminous region Z2 of the reflector 16 when the lamp is seen from a directly forward direction of the lamp. Therefore, without impairing the light distribution performance of the reflector optical system itself, it is possible to improve the light distribution performance of the lamp as a whole. Further, with use of the light guide 18, it is possible to obtain the above operations and effects without increasing the depth of the lamp.

As it has been described so far, according to this embodiment, it is possible to improve the light distribution performance of the vehicular lamp 10 that includes the reflector 16 and the light guide 18, without increasing the depth of the lamp.

Further, in the vehicular lamp 10 according to this embodiment, the unluminous region Z2 of the reflector 16, which would be an optically wasting portion, is used as a space to dispose the light guide 18. Accordingly, the lamp can have a compact configuration to save space.

In this embodiment, the vehicular lamp 10 includes, as the luminous region Z1 of the reflector 16, the first reflective surface 16a1 that is in the vicinity of the light-emitting element 20A and the second reflective surface 16a2 that is disposed with the unluminous region Z2 interposed between the second reflective surface 16a2 and the light-emitting element 20A. Accordingly, the light guide 18 can be disposed by efficiently using the space of the unluminous region Z2 of the reflector 16.

Also in this embodiment, since the light-emitting region in the front surface 18b of the light guide 18 is positioned ahead of part of the reflector 16, a three-dimensional appearance is given to the lamp.

Furthermore, in this embodiment, each of the light-emitting elements 20A is the amber light-emitting diode. Thus, the vehicular lamp 10 can function as the front turn signal lamp by lighting the light-emitting elements 20A to obtain the reflected light from the reflector 16. In addition, since each of the light-emitting elements 20B is the white light-emitting diode, the vehicular lamp 10 can also function as a clearance lamp by lighting the light-emitting elements 20B to obtain the light emitted by the light guide 18.

In the first embodiment, it is described that the light guide 18 is accommodated in the recessed groove section 16b. However, it is possible to adopt a configuration, in which the light guide 18 is displaced in the front-back direction from the position indicated in the first embodiment.

Next, a second embodiment of the present invention will be described.

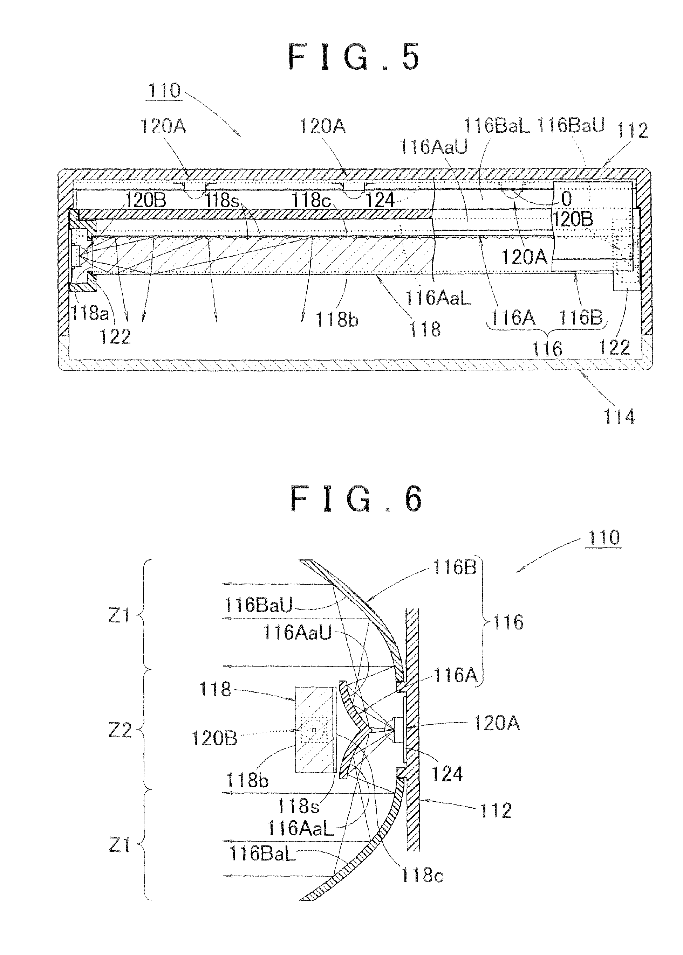

FIG. 4 is a front view of a vehicular lamp 110 according to the second embodiment. FIG. 5 is a cross-sectional view along the line V-V in FIG. 4, and FIG. 6 is a cross-sectional view along the line VI-VI in FIG. 4.

As shown in these figures, the vehicular lamp 110 functions as the front turn signal lamp and the clearance lamp when attached to a front end section of a vehicle. The vehicular lamp 110 includes a lamp body 112, a translucent cover 114 that is attached to a front end opening of the lamp body 112, five light-emitting elements 120A. 120B. a reflector 116. and a light guide 118. The light-emitting elements 120A, 120B, the reflector 116, and the light guide 118 are mounted in a lamp chamber that is formed by the lamp body 112 and the translucent cover 114.

Of the five light-emitting elements 120, 120B, the three light-emitting elements 120A, which are amber light-emitting diodes, constitutes a first light source for the front turn signal lamp. The remaining two light-emitting elements 120B. which are white light-emitting diodes, constitute a second light source for the clearance lamp.

The three light-emitting elements 120A are placed on a rear end section in the lamp chamber with the light-emitting surfaces thereof facing the forward direction of the lamp. Furthermore, these three light-emitting elements 120A are disposed on the same horizontal plane at equally spaced intervals in the lateral direction (that is, the vehicle width direction) and installed on a single board 124. The board 124 is fixedly supported by the lamp body 112.

The two light-emitting elements 120B are respectively disposed on a right end section and a left end section in the lamp chamber in a manner such that the light-emitting surfaces thereof face each other in a right-and-left direction. These two light-emitting elements 120B are installed on boards 126. Each of the boards 126 is fixedly supported by the lamp body 112.

The reflector 116 includes a first reflector 116A that is placed in front of the three light-emitting elements 120A and reflects, toward the rear of the lamp, the light emitted by the light-emitting elements 120A, and a second reflector 116B that reflects, toward the front of the lamp, the reflected light from the first reflector 116A.

The first reflector 116A has an upper reflective surface 116AaU and a lower reflectixe surface 116AaL, and the upper reflective surface 116AaU and the lower reflective surface 116AaL are formed symmetrically in the vertical direction. The second reflector 116B has an upper reflective surface 116BaU and a lower reflective surface 116HaL, and the upper reflective surface 116BaU and the lower reflective surface 116BaL arc formed symmetrically in the vertical direction.

Each of the upper reflective surface 116AaU and the lower reflective surface 116AaL of the first reflector 116A has an elliptic cylindrical surface with a first focal line thereof located on an axis that extends in a right-and-left direction to pass through the center of light emission O of each of the three light-emitting elements 120A. The upper reflective surface 116BaU and the lower reflective surface 116BaL of the second reflector 116B each has a parabolic cylindrical surface with a focal line thereof located on a second focal line of the elliptic cylindrical surface described above.

Accordingly, the light emitted from each of the light-emitting elements 120A and reflected by either the upper reflective surface 116AaU or the lower reflective surface 116AaL of the first reflector 16A is further reflected by either the upper reflective surface 116BaU or the lower reflective surface 116BaL of the second reflector 116B, and is directed to the front of the lamp as generally horizontal parallel light beams.

Therefore, in the reflector 116 of this embodiment, the upper reflective surface 116BaU and the lower reflective surface 116BaL of the second reflector 116B constitute the luminous region Z1 that looks luminous when the light-emitting elements 120A are lit and the vehicular lamp 110 is seen from the front of the vehicular lamp 110, while the first reflector 116A constitutes the unluminous region Z2 that does not look luminous when the light-emitting elements 120A are lit and the vehicular lamp 110 is seen from the front of the vehicular lamp 110.

The light guide 118 is arranged to extend in the lateral direction in a position in front of and in the vicinity of the second reflector 116B and is fixedly supported at right and left ends thereof by a pair of light guide support bodies 122. The pair of light guide support bodies 122 is fixedly supported by the lamp body 112. The two light-emitting elements 120B are respectively positioned in the vicinity of a right and left pair of lateral end surfaces 118a of the light guide 118.

The light guide 118 is set so that the cross section thereof along a vertical plane, which extends in the front-back direction of the lamp, is in a vertically long rectangular shape. In other words, the light guide 118 has a rear surface 118c and a front surface 118b that are formed in the form of vertical surfaces extending in parallel to each other. On the rear surface 118c of the light guide 118, a plurality of reflective elements 118s are formed at generahy equal intervals in the lateral direction. Each of the reflective elements 118s is formed in the form of a recessed groove that extends in the vertical direction and has a cuneiform cross section.

The optical effects achieved by this light guide 118 are the same as those achieved by the light guide 18 in the first embodiment.

Next, operations and effects of this embodiment will be described.

In the vehicular lamp 110 according to this embodiment, the light emitted by the light-emitting element 120A serving as the first light source is reflected toward the front of the lamp by the reflector 116, while the light emitted by the light-emitting element 120B serving as the second light source enters the light guide 118 through the lateral end surface 118a, which is one end surface of the light guide 118, and is emitted toward the front of the lamp through the front surface 118b. Therefore, the vehicular lamp 110 can obtain the improved light distribution performance when compared to a lamp with a reflector optical system that only includes the light-emitting clement 120A and the reflector 116.

Moreover, the reflector 116 includes the luminous region Z1 that looks luminous when the light-emitting elements 120A are lit and the vehicular lamp 110 is seen from the front of the vehicular lamp 110 and the unluminous region Z2 that does not look luminous when the light-emitting elements 120A are lit and the vehicular lamp 110 is seen from the front of the vehicular lamp 110. The light guide 118 is disposed so that the light-emitting region in the front surface 118b thereof overlaps the unluminous region Z2 of the reflector 116 when the lamp is seen from a directly forward direction of the lamp. Therefore, without impairing the light distribution performance of the reflector optical system itself, it is possible to improve the light distribution performance of the lamp as a whole. Further, with use of the light guide 118, it is possible to obtain the above operations and effects without increasing the depth of the lamp.

As it has been described so far, according to this embodiment, it is possible to improve the light distribution performance of the vehicular lamp 110 that includes the reflector 116 and the light guide 118, without increasing the depth of the lamp.

Further, in the vehicular lamp 110 according to this embodiment, the unluminous region Z2 of the reflector 116, which would be an optically wasting portion, is used as a space to dispose the light guide 118. Accordingly, the lamp can have a compact configuration to save space.

In this embodiment, the reflector 116 includes the first reflector 116A that is positioned in front of the three light-emitting elements 120A and reflects, toward the rear of the lamp, the light emitted by the light-emitting elements 120A, and the second reflector 116B that reflects, toward the front of the lamp, the reflected light from the first reflector 116A. In addition, the light-emitting region in the front surface 118b of the light guide 118 is positioned in front of the first reflector 116A, which provides the unluminous region Z2 of the reflector 116. Accordingly, the light guide can be disposed by efficiency using the space of the unluminous region Z2.

Furthermore, also in this embodiment, each of the light-emitting elements 120A is the amber light-emitting diode. Thus, the vehicular lamp 110 can function as the front turn signal lamp by lighting the light-emitting elements 120A to obtain the reflected light from the reflector 116. In addition, since each of the light-emitting elements 120B is the white light-emitting diode, the vehicular lamp 110 can function as a clearance lamp by lighting the light-emitting elements 120B to obtain the light emitted by the light guide 118.

In the second embodiment, it is described that the first reflector 116A has the upper reflective surface 116AaU and the lower reflective surface 116AaL and that the upper reflective surface 116AaU and the lower reflective surface 116AaL are formed symmetrical to each other in the vertical direction. It is also described that the second reflector 116B has the upper reflective surface 116BaU and the lower reflective surface 116BaL and that the upper reflective surface 116BaU and the lower reflective surface 116BaL are formed symmetrical to each other in the vertical direction. However, one or both of the first and second reflectors 116A, 116B may have an asymmetrical configuration in the vertical direction. Alternatively, a configuration may be employed that have the first reflective surfaces 116AaU, 116BaU only or the lower reflective surfaces 116AaL, 116BaL only.

Next, a modification of the second embodiment will be described.

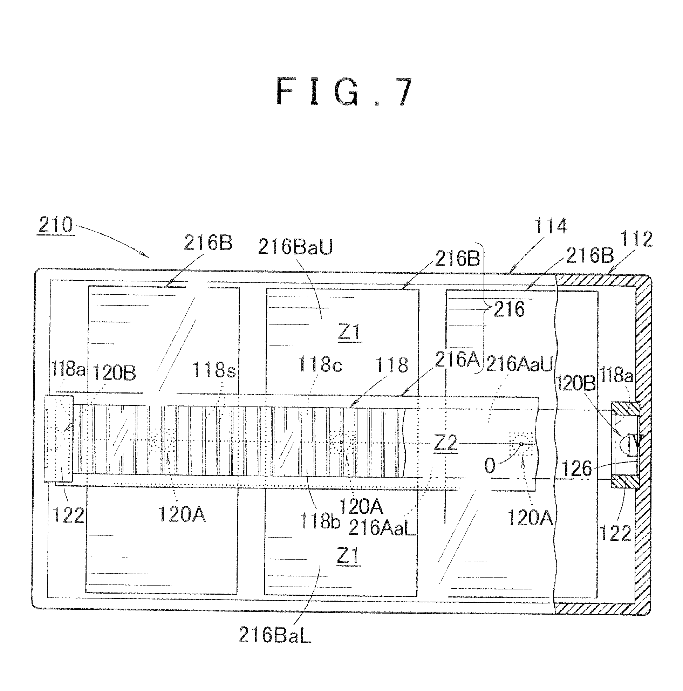

FIG. 7 is a diagram that is similar to FIG. 4 and shows a vehicular lamp 210 according to the modification.

As shown in FIG. 7, the fundamental configuration of the vehicular lamp 210 according to the modification is the same as what has been described for the second embodiment. However, the configuration of a reflector 216 differs from that of the reflector described in the second embodiment.

More specifically, the reflector 216 of this modification includes one first reflector 216A and three second reflectors 216B.

Similar to the first reflector 116A of the second embodiment, the first reflector 216A is positioned in front of the three light-emitting elements 120A and reflects, toward the rear of the lamp, the lights emitted by the light-emitting elements 120A.

The three second reflectors 216B are disposed in a manner such that the second reflector 116B of the second embodiment is divided into three pieces and spaced apart in the lateral direction. Further, each of the second reflectors 216B is disposed in a position that corresponds to a corresponding one of the three light-emitting elements 120A. Each of the second reflectors 216B has an upper reflective surface 216BaU and a lower reflective surface 216BaL that are formed symmetrical to each other in the vertical direction, and reflects, toward the front of the lamp, the light that is emitted by each of the light-emitting elements 120A and reflected by an upper reflective surface 216AaU and a lower reflective surface 216AaL of the first reflector 216A.

The operations and effects similar to those described in the second embodiment can be achieved also when the configuration of this modification is adopted.

In the above embodiments, the light-emitting elements 20B, 120B are respectively provided at the right and left pair of the lateral end surfaces 18a, 118a of the light guides 18. 118, However, the light-emitting elements 20B, 120B may be provided only at either the right lateral end surface 18a, 118a of the light guide 18, 118 or the left lateral end surface 18a, 118a of the light guide 18, 118.

In the above embodiments, the light guides 18, 118 extend linearly in the lateral direction. However, the light guides 18, 118 can extend in the vertical direction and/or in a curved shape.

In the above embodiment, the vehicular lamps 10, 110 can function as a day time running lamp when the light-emitting elements 20B, 120B are lit, by altering supply current to the light-emitting elements 20B. 120B. In addition, the vehicular lamps 10, 110 can function as both the clearance lamp and the day time running lamp by using a white light-emitting diode as each of the light-emitting elements 20A, 120A and each of the light-emitting elements 20B, 120B.

In the above embodiments, the descriptions have been made on the vehicular lamps 10, 110 that are provided in a front end section of the vehicle. However, even when the vehicular lamps 10, 110 are provided in a rear end section of the vehicle as tail and stop lamps, etc., it is possible to achieve the operations and effects similar to those described in the above embodiments by adopting the configurations similar to those described in the above embodiments.

The numerical values described as specifications in each embodiment are nothing but mere examples, and it must be understood that such values can be changed appropriately.

## Claims

1. A vehicular lamp (10) comprising:
a first light source (20A; 120A);
a reflector (16; 116; 216) that reflects, toward a front of the lamp (10), light emitted by the first light source (20A; 120A);
a second light source (20B; 120B); and
a light guide (118) that allows light emitted by the second light source (20B; 120B) to enter through an end surface of the light guide 118) and that emits the light from a front surface of the light guide (118) toward the front of the lamp (10), **characterized in that**
the reflector (16; 116; 216) includes:
a luminous region (Z1) that looks luminous when the first light source (20A; 120A) is lit and the lamp (10) is seen from the front of the lamp (10); and
an unluminous region (Z2) that does not look luminous when the first light source (20A; 120A) is lit and the lamp (10) is seen from the front of the lamp (10), and
the light guide (118) is disposed so that a light-emitting region in the front surface of the light guide (118) overlaps the unluminous region (Z2) when the lamp (10) is seen from the front of the lamp (10).

2. The vehicular lamp according to claim 1, wherein
the luminous region (Z1) includes:
a first reflective surface (16a1) in a vicinity of the first light source (20A); and
a second reflective surface (16a2) that is arranged with the unluminous region (Z2) interposed between the second reflective surface (16a2) and the first light source (20A).

3. The vehicular lamp according to claim 1 or 2, wherein:
the reflector (16) has a recessed section (16b) that is the unluminous region (Z2);
an imaginary plane that includes edges of the recessed section (16b) passes through the first light source (20A); and
the light guide (118) is placed in the recessed section (16b).

4. The vehicular lamp according to claim, 1 wherein
the reflector (116; 216) includes:
a first reflector (116A; 216A) that is positioned in front of the first light source (120A) and reflects, toward a rear of the lamp (10), the light emitted by the first light source (120A); and
a second reflector (116B; 216B) that reflects, toward the front of the lamp (10), reflected light from the first reflector (116A; 216A), and
the light-emitting region in the front surface of the light guide (118) is positioned in front of the first reflector (116A; 216A).

5. The vehicular lamp according to any one of claims 1 to 4, wherein
the light-emitting region in the front surface of the light guide (118) is positioned ahead of at least part of the reflector (16; 116; 216).

6. The vehicular lamp according to any one of claims 1 to 5, wherein
the first light source (20A; 120A) and the second light source (20B; 120B) have respective luminescent functions different from each other.

7. The vehicular lamp according to any one of claims 1 to 6. wherein
the light-emitting region in the front surface of the light guide (118) entirely covers the unluminous region (Z2) when the lamp (10) is seen from the front of the lamp (10).

8. The vehicular lamp according to any one of claims 1 to 7, wherein
the light guide (118) is disposed in a position such that the light guide (118) does not overlap an optical path of the light that is emitted by the first light source (20A;
120A) and reflected by the reflector (16; 116; 216) toward the front of the lamp (10).
